# EUROPEAN PATENT APPLICATION

(11) **EP 0 595 512 A2**
(43) Date of publication of application: **04.05.1994**
(21) Application number: 93308244.8
(22) Date of filing: 15.10.1993
(51) Int. Cl.: B60R 21/20

(54) **Cover for an air bag device**

(30) Priority: 30.10.1992 JP 292924/92
(71) Applicant: TAKATA CORPORATION, Minato-ku, Tokyo (JP)
(72) Inventor: Satoh, Takeshi, Kanzaki-gun, Shiga (JP)
(74) Representative: Goddard, David John

(57) **Abstract**

An air bag device cover (30), which covers the folded air bag of an air bag device and is pivoted open about one of its sides into the car cabin when the air bag is extended. The cover is provided with line-shaped low rigidity portions (36). The portions are disposed on lines intersecting the side about which the cover (30) pivots. The portions allow the cover to bend when the cover is pivoted open.

## Description

### FIELD OF THE INVENTION

The present invention relates to a cover for an air bag device installed in a steering wheel or an instrument panel of a car.

### DESCRIPTION OF THE RELATED ART

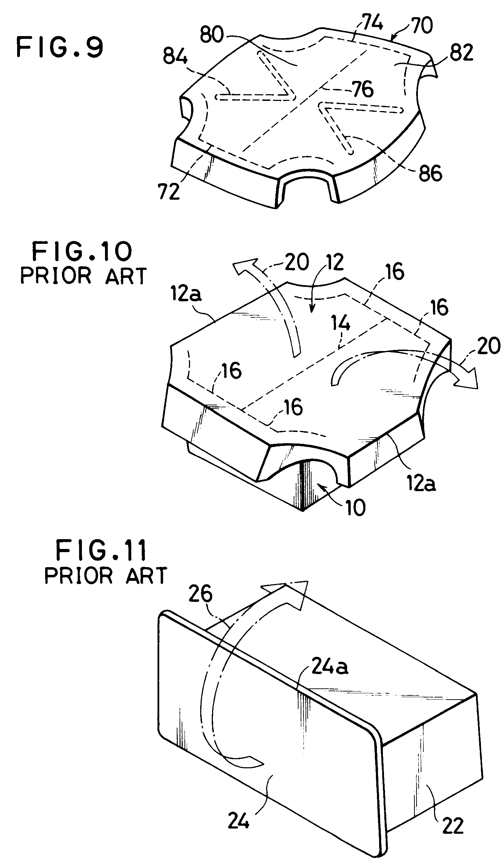

An air bag device for a driver is installed in a steering wheel of a vehicle, and, as shown in FIG. 10, comprises a retainer 10, an air bag, an inflator for generating gas (neither shown) fixed to the retainer 10 and a cover 12 which covers the air bag in a folded state. When the inflator is actuated, the cover 10 tears along the tear lines 14 and 16, so that flaps are formed. The flaps thus formed by the tear lines pivot open in the directions shown by the arrows 20 about the sides 12a.

An air bag device for a passenger is installed in an instrument panel of a vehicle comprises an air bag (not shown) in a container 22 as shown in FIG. 11. A front opening of the container is covered with a cover (lid) 24, and an inflator (not shown) is mounted on the container 22. The cover is shaped generally rectangular. When the inflator is actuated, the cover pivots open about a long side 24a as shown by an arrow 26.

When the cover for the air bag device is opened by being pushed by the air bag under the action of the inflator, extremely large stresses are applied to the cover by the air bag, so that the cover undergoes various changes in shape. Changes in shape of the cover means that energy of the inflator for extending the air bag is consumed (absorbed) in deforming the cover. This energy consumption necessitates a correspondingly high inflator generator pressure.

### OBJECT AND SUMMARY OF THE INVENTION

An object of the present invention is to make less the energy which is absorbed by the cover deformed during the inflator actuation to extend the air bag.

In the cover for an air bag device of the present invention, easily bendable low rigidity line-shaped portions are provided in the cover to make the cover bend along these low rigidity portions when it pivots.

Namely, the cover of the present invention covers the folded air bag of the air bag device and pivots open about one of its sides when the air bag inflates. The cover is characterized in that it comprises line-shaped low rigidity portions to allow the cover to bend when the cover pivots open.

Preferably, the easily bendable line is oriented in a direction which intersects with an axis about which the cover pivots when it pivots open.

In the present invention, when the inflator actuates to extend the air bag and the air bag pushes the cover from inside of the air bag device, the cover bends along its low rigidity lines as well as the cover pivots open about its axis of rotation. Accordingly, the stress applied to the cover by the air bag is concentrated in the low rigidity lines, whereby the cover is easily bent along the low rigidity lines even the stress applied to the cover is small. As a result, less energy is consumed in deforming the cover.

### BRIEF DESCRIPTION OF THE DRAWINGS

FIG. 1 is a perspective view of a cover 30 of the air bag device for a passenger according to a first preferred embodiment of the present invention;
FIG. 2 is a perspective view from the underside of the cover 30;
FIG. 3 is a view illustrating deformation of the cover 30;
FIG. 4 is another view illustrating the deformation of the cover 30;
FIG. 5 is a perspective view of a cover 50 according to a second preferred embodiment of the invention;
FIG. 6 is a view illustrating deformation of the cover 50;
FIG. 7 is a perspective view of a cover 60 according to a third preferred embodiment of the invention;
FIG. 8 is a view illustrating deformation of the cover 60 shown in FIG. 7;
FIG. 9 is a perspective view of the cover 70 of the air bag device for a driver according to a fourth preferred embodiment of the present invention;
FIG. 10 is a perspective view of an air bag device for a driver with a conventional cover; and
FIG. 11 is a perspective view of the air bag device for a passenger with a conventional cover.

### PREFERRED EMBODIMENTS

Preferred embodiments of the invention will now be described, with reference to the accompanying drawings.

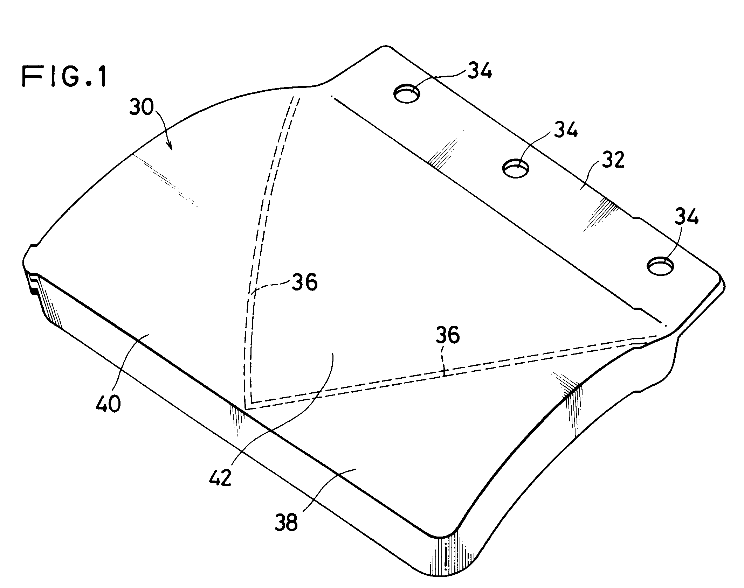

FIGS. 1 to 4 show a first embodiment of the invention.

The cover 30 is for an air bag device for a passenger, and is roughly rectangular in shape. An ear portion 32 by which the cover 30 is fixed to the container (not shown in FIGS. 1 to 4) is formed along one of the long sides of the cover 30 as an integral part of the cover. Bolt holes 34 are provided in this ear portion 32 for fixing the cover 30 to the container.

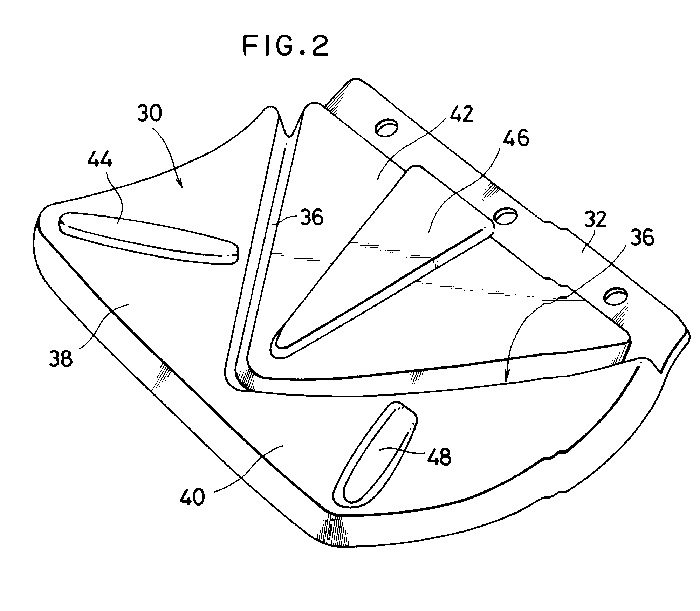

The cover 30 is made entirely of synthetic resin, and, as shown in FIG. 2, is provided with a low rigidity portion 36, consisting of a groove formed in the back side of the cover 30. The low rigidity portion 36 runs from both ends of the ear portion 32 to a mid-point on the side opposite the ear portion 32. The low rigidity portion 36 divides the cover up into three triangular areas: a first area 38, a second area 40 and a third area 42. Each of the areas 38, 40 and 42 is provided with a high rigidity portion 44, 46, 48 consisting of a rib.

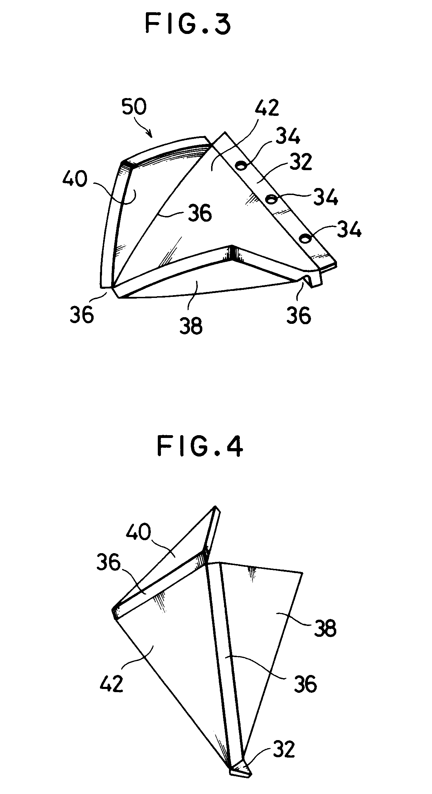

In the present embodiment, the air bag is positioned in the downward side of the cover 30 in FIG. 1. When the inflator (not shown) is actuated to extend the air bag so that the cover 30 is pushed, the cover 30 bends along the low rigidity portion 36 whereby the first and second areas 38 and 40 are pushed up, as shown in FIG. 3. Then the cover 30 bends along the ear portion 32, as shown in FIG. 4, the whole cover 30 pivots out into a cabin of a vehicle, and the air bag is allowed to extend into the cabin.

In this way, when the air bag exerts a pushing pressure on the cover 30, the pushing pressure is concentrated on the low rigidity portion 36, so that the cover 30 bends readily along this low rigidity portion 36. Therefore, little energy is consumed in deforming the cover 30, so that most of pressure of gases emitted by the inflator works effectively as a pushing pressure for extending the air bag. Consequently the inflator of smaller capacity can be used.

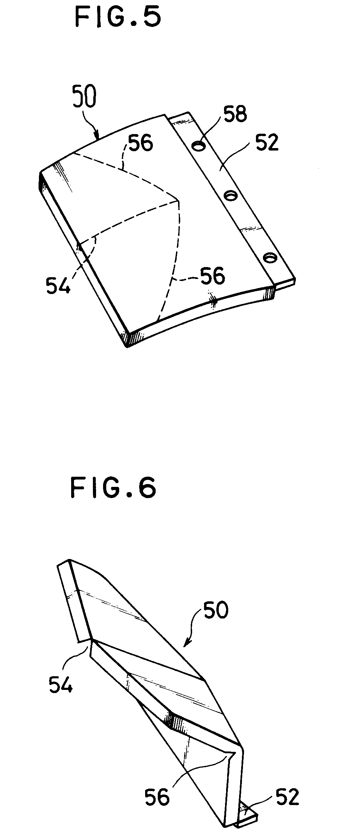

FIG. 5 is a perspective view of the cover 50 according to another preferred embodiment of the invention, and FIG. 6 is a view illustrating the deformation of the cover 50.

The cover 50 has a low rigidity portion 54 consisting of a deep groove. The groove runs across the cover toward the ear portion 52 from a mid-point of a side opposite the ear portion 52. A leading end of the low rigidity portion 56 finishes at half way of the cover 50. Another low rigidity portion 56, consisting of a shallow groove, run sideward from the leading end of the low rigidity portion 54. The groove runs at a slant across the cover with respect to a longitudinal direction of the ear portion 52. A reference numeral 58 denotes a bolt hole provided in the ear portion 52.

When the air bag (not shown) is extended by the inflator, the cover 50 bends into a V-shape along the low rigidity portion 54, and bends into an inverted V-shape along the low rigidity portion 56, as shown in FIG. 6. The pushing effort exerted on the cover 50 by the air bag is concentrated on the low rigidity portions 54 and 56. Accordingly, the cover 50 bends readily along these low rigidity portions, and relatively little energy is consumed in deforming the cover 50.

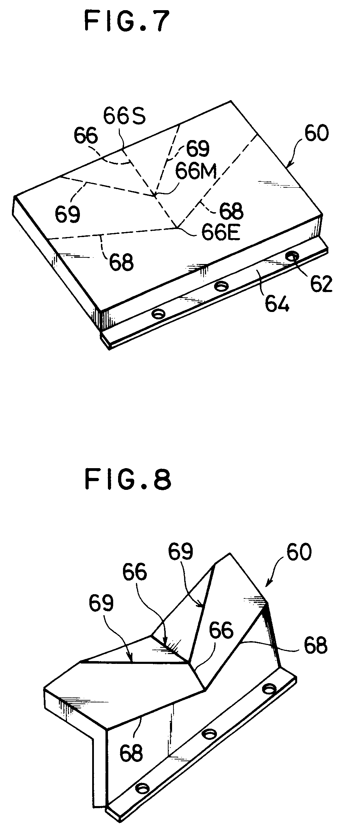

FIG. 7 is a perspective view of a cover 60 of an air bag device for a passenger according to still another preferred embodiment of the invention, and FIG. 8 is a view illustrating the deformation of the cover 60.

The cover 60 also has an ear portion 64 provided with bolt holes 62. The cover 60 has a low rigidity portions 66, 68 and 69. The portion 66 runs across the cover 60 toward the ear portion 64 from a mid-point 66S on the side opposite the ear portion 64. The low rigidity portions 68 run from the end point 66E of the low rigidity portion 66, in two directions to both sides of the cover 60. The portion 68 runs at a slant with respect to a longitudinal direction of the ear portion 64. The low rigidity portions 69 run in two directions to both sides of the cover 60. The portion 69 runs from a mid-point 66M of the portion 66 toward the sides.

When the extending force of the air bag acts on the cover 60 from the underside of FIG. 7, the cover 60 bends along the low rigidity portions 68 and 69 into an inverted V-shape, as shown in FIG. 8. The cover bends into a V-shape along the low rigidity portion 66 between points 66S and 66M. The cover 60 also bends into a inverted V-shape between the points 66M and 66E.

The pushing effort exerted on the cover 60 by the air bag is concentrated on the low rigidity portions 66, 68 and 69, so that the cover 60 bends readily along the low rigidity portions. Relatively little energy is consumed in deforming the cover 60.

As shown in FIG. 9, the invention can also be applied to a cover 70 of an air bag device for a driver. The cover 70 has tear lines 72, 74 along both sides thereof and another tear line 76 running between the mid-points of the tear lines 72 and 74. Two flap portions 80 and 82 separated by the tear line 76 are each provided with a low rigidity portion 84, 86 each consisting of grooves respectively. When the cover 70 is pushed out by the extending air bag, the tear lines 76, 72 and 74 tear, so that the flap portions 80 and 82 open out into a cabin of a vehicle. After the tear line 76 is torn, areas between the tear line 76 and portions 84, 86 are opened first with bending the areas along portions 84, 86. Thereafter, the whole flap portions 80 and 82 pivot open respectively.

In this preferred embodiment also, the pushing effort exerted on the cover 70 by the air bag is concentrated on the low rigidity portions 84 and 86, so that the cover bends readily along the low rigidity portions 84, 86. Accordingly, relatively little energy is consumed in deforming the cover.

As described above, when the air bag exerts the pushing pressure on the cover of the present invention, stress is concentrated in the low rigidity portions of the cover so that the cover bends readily along these low rigidity portions. As a result, less energy is absorbed by the cover deforming when the cover is pivoted open. Consequently, most of the gas pressure generated by the inflator acts to extend the air bag, and the air bag extends quickly. The capacity of the inflator can also be reduced. And, because unnecessary deformation of the cover is reduced, the extra material which has been necessary for strengthening the cover hitherto can be reduced or deleted, so that the cover can be made lighter.

## Claims

1. A cover of an air bag device , which covers a folded air bag and is pivoted open about one side thereof into a vehicle cabin when the air bag is extended, characterized in that said cover comprises a line-shaped low rigidity portion along which the cover is bent when the cover is pivoted open.

2. A cover according to claim 1, in which said low rigidity portion is straight line-shaped.

3. A cover according to claim 2, in which said low rigidity portion is positioned on a line which intersects the axis about which the cover pivots when the cover pivots open.

4. A cover according to claim 3, in which said cover is for an air bag device for a passenger and is shaped almost rectangular.

5. A cover according to claim 4, in which said cover is made of synthetic resin and has a low rigidity portion formed by a groove in its back side.

6. A cover according to claim 5, in which said groove runs from both ends of one of the long sides of the cover to the center of the other long side of the cover.

7. A cover according to claim 5, in which areas delineated by the groove are each provided with a rib for reinforcing thereof.

8. A cover according to claim 5, in which said cover has a first low rigidity portion formed by a deep groove and a second low rigidity portion formed by a shallow groove.

9. A cover according to claim 8, in which said cover has first and second long sides, and said cover pivots open about said first long side when said air bag is extended.

10. A cover according to claim 9, in which
said first low rigidity portion is generally perpendicular to said second long side and runs from the center of said second long side to the middle of said cover, and
said second low rigidity portion is at a slant with respect to said long side of the cover and runs from the end of the first low rigidity portion in the middle of the cover to both short sides of the cover.

11. A cover according to claim 9, in which said cover further comprises a third low rigidity portion which runs from an intermediate point on said first low rigidity portion toward second long side.

12. A cover according to claim 2, in which
said cover is for an air bag device for a driver,
said cover has a first tear line running across the middle of said cover and second tear lines which run along the sides of said cover, and
said cover further has two flaps which are isolated by these tear lines.

13. A cover according to claim 12, in which each of said flaps is provided with a low strength portion.

14. A cover according to claim 13, in which the low rigidity portion runs from the center of the end of the flap formed by said first tear line to the side of a base portion of the flap.
